(19) Europäisches Patentamt
European Patent Office
Office européen des brevets

(11) **EP 4 287 493 A1**

(12) **EUROPÄISCHE PATENTANMELDUNG**

(43) Veröffentlichungstag:
06.12.2023 Patentblatt 2023/49

(21) Anmeldenummer: 22177033.2

(22) Anmeldetag: 02.06.2022

(51) Internationale Patentklassifikation (IPC):
*H02P 6/16* (2016.01)   *H02P 6/15* (2016.01)

(52) Gemeinsame Patentklassifikation (CPC):
**H02P 6/16; H02P 6/15**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Hoffmann, Andreas**
**91077 Neunkirchen am Brand (DE)**

(74) Vertreter: **Siemens Patent Attorneys**
**Postfach 22 16 34**
**80506 München (DE)**

(54) **VERFAHREN ZUR KORREKTUR EINER FEHLPOSITIONIERUNG EINES HALL-SENSORS BEI EINER BÜRSTENLOSEN GLEICHSTROMMASCHINE**

(57)     Die Erfindung betrifft ein Verfahren für eine bürstenlose Gleichstrommaschine (1),
wobei die bürstenlose Gleichstrommaschine (1) einen Stator (3) mit wenigstens drei Erregerwicklungen (U, V, W), einen Rotor (2) mit wenigstens einem Permanentmagnet (N, S), eine Sensoreinrichtung mit dem einen Hall-Sensor (H1) sowie wenigstens zwei weiteren Hall-Sensoren (H2, H3) und eine Stromrichtereinrichtung (4) zur Vorgabe eines Stromflusses durch die Erregerwicklungen (U, V, W) umfasst.

Bei einer derartigen bürstenlosen Gleichstrommaschine (1) soll eine Fehlpositionierung wenigstens eines ersten Hall-Sensors (H1) korrigiert werden.

Die Erfindung sieht hierzu vor, dass ein Stromfluss durch die Erregerwicklungen (U, V, W) derart vorgegeben wird, dass sich ein elektromagnetisches Erregerfeld und synchron dazu der Rotor (2) um wenigstens einen vorgegebenen oder vorgebbaren Winkelbereich dreht, wobei während der Drehung ein Ist-Erregerfeld-Winkel erfasst wird, bei dem ein von dem ersten Hall-Sensor (H1) erzeugtes Ausgangssignal sich ändert,
wobei eine Differenz zwischen dem Ist-Erregerfeld-Winkel und einem Soll-Erregerfeld-Winkel bestimmt wird und anhand der Differenz ein erster Korrekturwinkel ($\Delta\delta$) für den ersten Hall-Sensor (H1) bestimmt wird,
wobei der erste Korrekturwinkel ($\Delta\delta$) in einer von der Stromrichtereinrichtung (4) umfassten Steuereinrichtung (5) zur Steuerung des Stromflusses durch die Erregerwicklungen (U, V, W) berücksichtigt wird.

Die Erfindung bietet den Vorteil, dass ein Fehlpositionierung eines Hall-Sensors auf elektronischem Weg korrigiert werden kann.

FIG 5

**Beschreibung**

Die Erfindung betrifft ein Verfahren zur Korrektur einer Fehlpositionierung wenigstens eines ersten Hall-Sensors einer bürstenlosen Gleichstrommaschine, wobei die bürstenlose Gleichstrommaschine einen Stator mit wenigstens drei Erregerwicklungen, einen Rotor mit wenigstens einem Permanentmagnet, eine Sensoreinrichtung mit dem einen Hall-Sensor sowie wenigstens zwei weiteren Hall-Sensoren und eine Stromrichtereinrichtung zur Vorgabe eines Stromflusses durch die Erregerwicklungen umfasst.

Bürstenlosen Gleichstrommaschinen, insbesondere bürstenlose Gleichstrommotoren, englischsprachig häufig als "BLDC" - Brushless DC Motor bezeichnet, werden aufgrund der Einfachheit des Gebersystem und des Controllers oft mittels einer Stromrichtereinrichtung in Form eines Blockkommutators angesteuert, welche diverse Nachteile (Drehmomentrippel, erhöhte Verluste usw.) mit sich bringt.

Zur Kommutierung des Stromflusses bei einer bürstenlosen Gleichstrommaschine ist es erforderlich, die Winkellage (Winkelstellung) des Rotors gegenüber dem Stator zu kennen. Dabei ist es in der Regel - insbesondere im Fall der genannten Blockkommutierung - nicht erforderlich, die Winkellage exakt zu bestimmen, sondern die Detektion erfolgt bei vielen Anwendungen mittels einer Sensoreinrichtung, die wenigstens einen, in der Regel jedoch drei jeweils bezüglich einer Achse der Maschine um einen Winkel versetzt zueinander an der Maschine angeordnete Hall-Sensoren (Hall-Geber) umfasst, die kostengünstig verfügbar sind und zum Detektieren einer Winkellage des Rotors relativ zu dem Stator dienen.

Bei der genannten Anwendung ist es nicht erforderlich, die Stärke des von dem bzw. den Permanentmagneten erzeugten Magnetfeldes zu bestimmen, sondern die Kenntnis der Magnetfeldrichtung (Polarisierungsrichtung) genügt. Die Hall-Sensoren liefern daher jeweils nur ein binäres Signal, welches die Polarisierung des Magnetfeldes (in radialer Richtung bezüglich der Maschinen-Achse) liefert. Aus diesen Signalen lässt sich daher die Winkellage des Rotors nur relativ ungenau direkt ableiten.

Für eine feldorientierte Regelung (FOC) des Stromes in den Erregerwicklungen muss der Rotorwinkel hingegen möglichst exakt bekannt sein. Daher wird für eine derartige Anwendung bislang auf eine weniger kostengünstige Sensoreinrichtung zurückgegriffen, welche eine höhere Auflösung bietet.

Aufbau und Funktionsweise eines bürstenlosen Gleichstrommotors gehen beispielsweise aus https://de.wikipedia.org/wiki/B%C3%BCrstenloser_Gleichstrommo tor bzw. https://en.wikipedia.org/wiki/Brushless_DC_electric_motor hervor.

Auch eine feldorientierte Regelung (FOC) des Motorstromes unter Verwendung binärer Hall-Sensoren ist möglich, wie aus einer zum Zeitpunkt der Anmeldung dieser Erfindung unveröffentlichten parallelen Patentanmeldung der Anmelderin hervorgeht.

Während bei einer bei bürstenlosen Gleichstrommaschinen häufig verwendeten Blockkommutierung der Rotorwinkel ohnehin gerundet und beispielsweise bei einer einpoligen Maschine damit nur auf $\pm$ 30° genau bestimmt wird, ist für eine feldorientierte Regelung eine wesentlich genauere Bestimmung des Rotorwinkels erforderlich.

Die Hall-Sensoren werden häufig mit einer relativ großen mechanischen Toleranz (Abweichung von der Sollposition) (z.B. $\varphi_{mech}$ = +- 3,5 °) und einer sich daraus möglicherweise ergebenden Fehlpositionierung verbaut.

Mit zunehmender Polpaarzahl wirkt sich diese Fehlpositionierung zunehmend auf den "elektrischen Winkel" und somit auf das zu erreichende maximale Drehmoment bzw. die Effizienz aus.

Je größer die Abweichung zwischen realem und gemessenen Rotorwinkel ist, umso schlechter ist beispielsweise die Drehmomentabgabe bei einem bürstenlosen Gleichstrommotor.

Aufgabe der vorliegenden Erfindung ist es daher, bei einer bürstenlosen Gleichstrommaschine mit einer kostengünstigen Sensoreinrichtung, die Hall-Sensoren umfasst, eine Fehlpositionierung zu korrigieren.

Diese Aufgabe wird bei einem Verfahren zur Korrektur einer Fehlpositionierung wenigstens eines ersten Hall-Sensors einer bürstenlosen Gleichstrommaschine gemäß dem Oberbegriff dadurch gelöst, dass ein Stromfluss durch die Erregerwicklungen derart vorgegeben wird, dass sich ein elektromagnetisches Erregerfeld und synchron dazu der Rotor um wenigstens einen vorgegebenen oder vorgebbaren Winkelbereich dreht,

wobei während der Drehung ein Ist-Erregerfeld-Winkel erfasst wird, bei dem ein von dem ersten Hall-Sensor erzeugtes Ausgangssignal sich ändert,
wobei eine Differenz zwischen dem Ist-Erregerfeld-Winkel und einem Soll-Erregerfeld-Winkel bestimmt wird und anhand der Differenz ein erster Korrekturwinkel für den ersten Hall-Sensor bestimmt wird,
wobei der erste Korrekturwinkel in einer von der Stromrichtereinrichtung umfassten Steuereinrichtung zur Steuerung des Stromflusses durch die Erregerwicklungen berücksichtigt wird.

Diese Vorgehensweise hat insbesondere den Vorteil, dass die Fehlpositionierung "elektronisch" gelöst bzw. korrigiert wird. Es muss also keine "mechanische" Korrektur der fehlerhaften Positionierung an der Maschine vorgenommen werden. Dies vereinfacht und verbilligt die Korrektur erheblich.

Die Erfindung sieht insbesondere vor, dass sich bei der Durchführung des erfindungsgemäßen Verfahrens zur Korrektur der Fehlpositionierung die Feldrichtung des Erregerfeldes nur sehr langsam ändert im Vergleich zum regulären Betrieb der Maschine. Beispielsweise beträgt die Winkelgeschwindigkeit weniger als ein Prozent im Vergleich zum regulären Betrieb.

Weiterhin vorteilhaft wird die Ermittlung des Positionsfehlers bei unbelasteter Maschine durchgeführt und es erfolgt zudem vorteilhaft keine Beschleunigung. Dadurch wird gewährleistet, dass sich der Rotor exakt nach dem Erregerfeld ausrichtet.

Eine übliche Ausführungsform einer bürstenlosen Gleichstrommaschine sieht vor, dass genau drei Erregerwicklungen gleichmäßig (jeweils um 120° zueinander versetzt) um eine Rotationsachse der bürstenlosen Gleichstrommaschine (nachfolgend auch kurz "Maschine" genannt) verteilt am Stator angeordnet sind. Diese Ausführungsform ist weit verbreitet und besonders kostengünstig. Es sind jedoch auch mehr als drei, insbesondere Vielfache von drei Erregerwicklungen möglich. Auch eine ungleichmäßige Verteilung der Erregerwicklungen ist denkbar, aber unüblich. Ferner sind auch Ausführungsformen mit lediglich einer oder zwei Erregerwicklungen denkbar, aber ebenfalls unüblich.

Mittels der drei Erregerwicklungen kann ein magnetisches Drehfeld erzeugt werden, welches während einer elektrischen Periode des Motorstromes um 360° umläuft. Das magnetische Drehfeld hat einen Nord- und einen Südpol und damit die Polpaarzahl 1.

Durch die Anordnung von Vielfachen von drei Erregerwicklungen können eine entsprechende Anzahl an Polpaaren und damit Motoren mit entsprechend höherer Polpaarzahl erzeugt werden.

Eine besonders einfache und kostengünstige Ausführungsform einer bürstenlosen Gleichstrommaschine sieht lediglich einen Permanentmagnet und damit ein Polpaar am Rotor vor. Eine andere Ausführungsform sieht jedoch eine Vielzahl an Permanentmagneten und damit einhergehend eine Vielzahl an Polpaaren vor, die, insbesondere gleichmäßig, um eine bzw. die Rotationsachse der Maschine verteilt am Rotor angeordnet sind. Dadurch entstehen eine höheres Drehmoment sowie ein gleichmä-ßigerer Drehmomentverlauf der Maschine.

Üblicherweise stimmt die Anzahl der Polpaare des Stators mit der Anzahl der Polpaare des Rotors überein und bestimmt die Polpaarzahl der Maschine bzw. des Motors.

Eine Ausführungsform einer bürstenlosen Gleichstrommaschine sieht vor, dass die Sensoreinrichtung der bürstenlosen Gleichstrommaschine mehrere, insbesondere genau drei Hall-Sensoren umfasst. Diese Ausführungsform bietet den Vorteil, dass damit auch die Winkelstellung des Rotors bei ruhender Maschine bestimmt werden kann.

Vorteilhaft sind die Hall-Sensoren gleichmäßig, also um einen Winkel von 120° bezüglich einer Achse bzw. der Rotationsachse der Maschine versetzt am Stator angeordnet. Es sind jedoch auch andere Abstände möglich. So ist ein Abstand von jeweils 60° zwischen zwei benachbarten Hall-Sensoren ebenfalls häufig anzutreffen.

Der Rotor der Maschine ist entlang seines Außenumfangs durch die Anzahl und Anordnung der Permanentmagnete in Polabschnitte einteilbar, wobei sich benachbarte Polabschnitte hinsichtlich ihrer Polarisierung (Nordpol oder Südpol) unterscheiden. Bewegt sich durch die Drehbewegung des Rotors die Grenze zwischen zwei benachbarten Polabschnitten (ein Pol-Übergang) an einem Hall-Sensor vorbei, so wechselt dessen Ausgangssignal von High (1) nach Low (0) oder umgekehrt.

Die Anzahl der Pol-Übergänge am Außenumfang des Rotors entspricht der doppelten Polpaarzahl des Rotors. Ein Rotor mit der Polpaarzahl eins hat demnach einen Nord- und einen Südpol und entlang seines Außenumfangs zwei Pol-Übergänge.

Durch die genannte Anordnung der Hallsensoren lässt sich die Winkellage des Rotors in 6 Sektoren einteilen, die sich jeweils durch unterschiedliche, von den Hall-Sensoren erzeugte Ausganssignale unterscheiden. Für alle Winkellagen innerhalb eines Sektors liefern die Hall-Sensoren hingegen dieselben Ausgangssignale.

Durch die genannte Einteilung der Winkellage des Rotors in Sektoren und die Anordnung der Hall-Sensoren ist es möglich, den von den Hall-Sensoren erzeugten Ausganssignalen jeweils eindeutig einen bestimmten Sektor zuzuordnen, innerhalb dessen die aktuelle Winkellage des Rotors liegt. Dies gilt insbesondere auch bei ruhendem Motor, so dass man bereits vor dem Hochlauf die ungefähre Winkellage des Rotors kennt.

Anhand der zeitlichen Abfolge der Ausgangssignale der Hall-Sensoren lässt sich bei der Rotation des Rotors, auch anhand der Abfolge dadurch erkannter Sektoren, die Drehrichtung des Rotors und - zumindest näherungsweise - auch die Winkelgeschwindigkeit bestimmen, mit der sich der Rotor um die Maschinenachse dreht.

Bei der Erfindung macht man sich den Umstand zunutze, dass durch eine gezielte Steuerung des Stromflusses durch die Erregerwicklungen das Erregerfeld (soll heißen: die Feldrichtung des Erregerfeldes) sehr genau ausgerichtet werden kann. Die Feldrichtung ist wiederum direkt verknüpft mit der Phasenlage des Erregerstromes (der Erregerströme, da es sich ja zumindest um ein dreiphasiges Erregersystem handelt), sodass durch eine entsprechende Vorgabe des Erregerstromes die Feldrichtung des Erregerfeldes und damit einhergehend der mechanische Winkel des Rotors - im Rahmen der mechanischen und elektrischen Toleranzen - "exakt" bekannt sind.

So kann durch gezielte Veränderung der Feldrichtung ermittelt werden, bei welchem mechanischen Winkel des Rotors das binäre Ausgangssignal eines bestimmten Hall-Sensors kippt. Durch einen Vergleich des so ermittelten mechanischen Winkels mit einem erwarteten Winkel, bei dem das Ausgangssignal aufgrund einer beabsichtigten, nicht fehlerbehafteten ("idealen") Positionierung (Sollposition) des betreffenden Hall-Sensors am Stator eigentlich hätte kippen müssen, kann so über die Abweichung zwischen den Winkeln (Soll-Winkel, Ist-Winkel) direkt auf die Fehlpositionierung des Hall-Sensors geschlossen werden.

Die so ermittelte Fehlpositionierung kann damit nachfolgend im regulären Betrieb der bürstenlosen Gleichstrommaschine berücksichtigt und somit korrigiert werden.

Insgesamt wird demnach mittels einer "Testfahrt" ermittelt, wo sich der Hall-Sensor tatsächlich am Stator befindet bzw. um welche Winkelabweichung er von seiner Sollposition abweicht.

Für die Testfahrt selbst gibt es mehrere Möglichkeiten. So kann der Rotor während der Testfahrt um einen bestimmten Winkel in einer bestimmten Richtung gedreht werden, z.B. eine Vollständige Umdrehung um 360° im Uhrzeigersinn.

Es ist aber auch möglich, einen Pol-Übergang des Rotors gezielt in den Bereich des betreffenden Hall-Sensors zu bewegen und, dort angekommen, den Rotor um einen bestimmten Winkelbereich, z.B. ± 10°, um die angefahrene Position zu drehen.

Häufig werden die Hall-Sensoren auf einer gemeinsamen Platine befestigt und diese Platine in der Maschine verbaut. Wird die Platine verdreht gegenüber einer optimalen Platzierung verbaut, so haben in der Regel alle Hall-Sensoren auf der Platine dieselbe Fehlpositionierung. Ein für einen Hall-Sensor ermittelter Korrekturwinkel kann so in guter Näherung als Korrekturwinkel für alle Hall-Sensoren verwendet werden. Die Testfahrt beschränkt sich so ggf. auf eine Messung.

Selbstverständlich ist es jedoch auch möglich, weitere, insbesondere alle Hall-Sensoren in der gezeigten Weise zu vermessen und entsprechende Korrekturwinkel für alle Hall-Sensoren separat zu ermitteln. Der Aufwand ist dadurch zwar größer, aber es kann damit jeder Hall-Sensor separat korrigiert werden, was insgesamt die Genauigkeit weiter erhöht.

Eine Ausführungsform der Erfindung sieht vor, dass mehrere Testfahrten für einen Hall-Sensor unternommen werden. Das beschriebene Verfahren wird demnach mehrfach hintereinander für einen Hall-Sensor ausgeführt und zumindest der Korrekturwinkel für diesen Hall-Sensor entsprechend mehrfach hintereinander bestimmt. Aus den so ermittelten Korrekturwinkeln wird schließlich, insbesondere durch Mittelung, ein gemittelter Korrekturwinkel für diesen Hall-Sensor bestimmt und nachfolgend bei der Regelung des Motors im Betrieb berücksichtigt.

Die Erfindung ist besonders dann von Vorteil, wenn die bürstenlose Gleichstrommaschine mit einer feldorientierten Regelung (unter Berücksichtigung des bzw. der Korrekturwinkel) betrieben wird, da bei dieser Regelungsart Toleranzen der ermittelten Rotorlage stärker ins Gewicht fallen im Vergleich zu anderen Regelungsverfahren.

Kennt man die Winkelstellung des Rotors zu einem bestimmten Zeitpunkt bzw. zu bestimmten Zeitpunkten exakt (immer dann, wenn sich ein Pol-Übergang an einem der Hall-Sensoren vorbei bewegt und das Ausgangssignal des betreffenden Hall-Sensors "kippt") und kennt man ferner die Winkelgeschwindigkeit, mit der der Rotor rotiert, so lassen sich Winkelstellungen des Rotors nach einem solchen Zeitpunkt extrapolieren bzw. Winkelstellungen zwischen solchen Zeitpunkten interpolieren.

Anders als bei Regelungsverfahren, bei denen bei einer bürstenlosen Gleichstrommaschine unter Verwendung von Hall-Sensoren lediglich die Hauptwinkel der Sektoren bestimmt und zur Regelung des Kommutators verwendet wurden, können damit "korrigierte Winkelstellungen" ermittelt werden, die zu jedem Zeitpunkt nicht nur einen der Hauptwinkel, sondern wie beschrieben auch dazwischen liegende, soll heißen beliebige Winkelstellungen zwischen den jeweiligen Sektorgrenzen, angeben. Damit wird eine feldorientierte Regelung des Erregerstromes mittels einer Stromrichtereinrichtung möglich.

Bei der Winkelgeschwindigkeit handelt es sich um die erste Ableitung der Winkelstellung des Rotors nach der Zeit. Noch genauere Ergebnisse hinsichtlich der aktuellen Winkelstellung des Rotors lassen sich dadurch erzielen, dass neben der Winkelgeschwindigkeit, also der ersten Ableitung der Winkelstellung des Rotors nach der Zeit, noch höhere Ableitungen, z.B. die zweite Ableitung (Winkelbeschleunigung) ebenfalls berücksichtigt werden.

Bei einer Maschine mit Polpaarzahl 1 stimmten der elektrische Zyklus und der mechanische Zyklus überein. D.h., werden die drei Erregerwicklungen mit einer vollständigen elektrischen Periode (entsprechend einem "elektrischen Winkel" von 360°) angesteuert, so bewegt sich auch der Rotor (die Mechanik) um 360°. Der "elektrische" und der "mechanische" Winkelbereich einer Periode stimmen demnach überein.

Anders hingegen bei Maschinen mit Polpaarzahlen > 1. Bei der Polpaarzahl 2 überstreicht das von den Erregerspulen erzeugte Magnetfeld bei einer vollständigen Periode des Erregerstroms (Motorstroms) lediglich einen Winkel von 180°. Ebenso bilden die 6 Sektoren, die von den mittels der drei Hall-Sensoren erzeugten Ausgangssignale unterscheidbar sind, lediglich einen Winkelbereich von 180° ab, im Unterschied zu einem Bereich von 360° bei Polpaarzahl 1. Der "elektrische Winkel" ist daher ggf. durch die Polpaarzahl zu dividieren, um den "mechanischen Winkel" (den von dem Rotor überstrichenen Winkelbereich bei einer Periode des Erregerstromes) zu erhalten. Die Erfindung ist besonders vorteilhaft bei einer bürstenlosen Gleichstrommaschine anwendbar, bei der der Rotorwinkel in der oben beschriebenen Weise ermittelt wird. Durch die damit erreichbare, sehr genaue Bestimmung der Winkellage in Verbindung mit einer Korrektur etwaiger Fehlpositionierungen der verwendeten Hall-Sensoren wird die Winkellage noch genauer bestimmt, was insbesondere bei einer feldorientierten Regelung von Vorteil ist.

Die Erfindung wird nachfolgend anhand von Ausführungsbespielen exemplarisch näher beschrieben und erläutert. Dabei zeigen:

FIG 1    eine bürstenlose Gleichstrommaschine mit einer Stromrichtereinrichtung,

FIG 2    Ausganssignale von Hall-Sensoren,

FIG 3    Sektoren und Winkel bei einer Kommutierung,

FIG 4    durch eine Fehlpositionierung verursachte Winkelfehler,

FIG 5    ein Blockschaltbild einer Winkelbestimmungseinrichtung,

FIG 6    Verfahrensschritte bei der Durchführung eines erfindungsgemäßen Verfahrens.

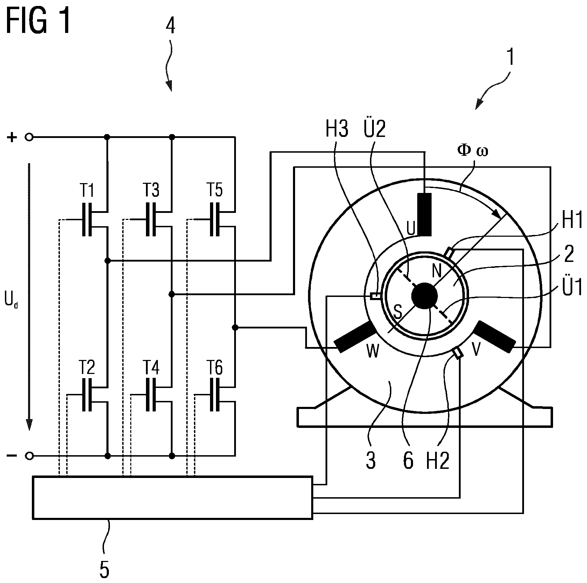

FIG 1 zeigt eine bürstenlose Gleichstrommaschine in Form eines bürstenlosen Gleichstrommotors 1, umfassend einen Rotor 2 und einen Stator 3. Der Rotor 2 umfasst im Ausführungsbeispiel einen einzigen Permanentmagnet mit dem ersichtlichen Nordpol N und Südpol S. Die Polpaarzahl des Rotors beträgt somit 1. Selbstverständlich sind auch Rotoren mit einer höheren Polpaarzahl möglich.

Der Rotor umfasst im Ausführungsbeispiel an seinem Außenumfang somit zwei Magnetpole (N und S) und damit über den Umfang betrachtet zwei Pol-Übergänge Ü1 und Ü2 zwischen unterschiedlichen Polen (Bereichen unterschiedlicher Polarisierung).

Im Ausführungsbeispiel gemäß FIG 1 sind die drei Hall-Sensoren H1 bis H3 jeweils um einen Winkel von 120° gegeneinander versetzt am Stator 3 angeordnet, wobei der Hall-Sensor H1 um 30° gegenüber der der Nullstellung des Rotors 2 (bei 12 Uhr) im Uhrzeigersinn versetzt am Stator 3 angeordnet ist. Ebenso wäre es möglich, dass die beiden benachbarten Hall-Sensoren H1 und H2 sowie die beiden benachbarten Hall-Sensoren H2 und H3 jeweils einen Winkel von 60° einschließen. Beide Sensor-Anordnungen haben die Eigenschaft, dass sich bei der Rotation des Rotors 2 in einer bestimmten Richtung stets nach einem Drehwinkel von 60° einer der beiden Pol-Übergänge Ü1 oder Ü2 an einem der drei Hall-Sensoren H1, H2 oder H3 vorbei bewegt.

Immer dann, wenn sich ein Pol-Übergang Ü1 oder Ü2 an einem der Hall-Sensoren H1 bis H3 vorbei bewegt, wechselt dessen Ausgangssignal von High (1) nach Low (0) oder umgekehrt, es "kippt".

Die High- und Low-Signale eines jeden Hall-Sensors H1 bis H3 sind somit bei der Rotation des Rotors 2 um 180° versetzt und die drei Ausgangssignale der Hall-Sensoren H1 bis H3 (Hall-Signale) sind untereinander bei der gezeigten Anordnung wiederum um 120° zueinander versetzt.

Weiterhin umfasst der bürstenlose Gleichstrommotor 1 im Stator 3 die drei Erregerwicklungen U, V und W, die ein Stator-Magnetfeld erzeugen.

Bei dem in FIG 1 gezeigten Gleichstrommotor 1 sind verschiedene Kommutierungsarten möglich. Einerseits kann dazu eine Stromrichtereinrichtung 4 als Blockkommutator ausgebildet sein, bei dem die Transistoren T1 bis T6 als "Schalter" ausgebildet sind bzw. als Schalter verwendet werden und damit den Erregerwicklungen U, V und W des Motors 1 jeweils ein Erregerstrom aus der Gleichspannungsquelle $U_d$ zugeführt wird. Die Ansteuerung der Transistoren T1 bis T6 erfolgt mittels einer Steuerung 5, der die Ausgangssignale der drei Hall-Sensoren H1, H2 und H3 zugeführt sind. Dabei werden die Transistoren T1 bis T6 derart angesteuert, dass die Erregerwicklungen U, V und W ein Drehfeld erzeugen, welches in 6 Richtungs-Stufen um 360° umläuft und die Rotation des Rotors 2 bewirkt. Die Ansteuerung der Transistoren T1 bis T6 und damit die Stromzufuhr zu den Erregerwicklungen U, V und W erfolgen dabei in Abhängigkeit der Winkelstellung $\phi$ des Rotors 2.

Neben der Blockkommutierung sind auch andere Kommutierungsarten (Raumzeigermodulation, Sinusmodulation, etc.) möglich, bei denen insbesondere die Transistoren T6 bis T6 mittels pulsförmiger Signale angesteuert werden, wobei die Pulsweiten vorteilhaft sinusförmig moduliert sind. Damit kann mittels der Erregerwicklungen U, V und W ein gleichmäßig rotierendes Drehfeld erzeugt werden - im Unterschied zu dem sprunghaft sich ändernden Drehfeld bei der Blockkommutierung. Gegebenenfalls sind für diese weiteren Kommutierungsarten noch zu den Transistoren T1 bis T6 parallel geschaltete Dioden erforderlich, die in FIG 1 nicht dargestellt sind.

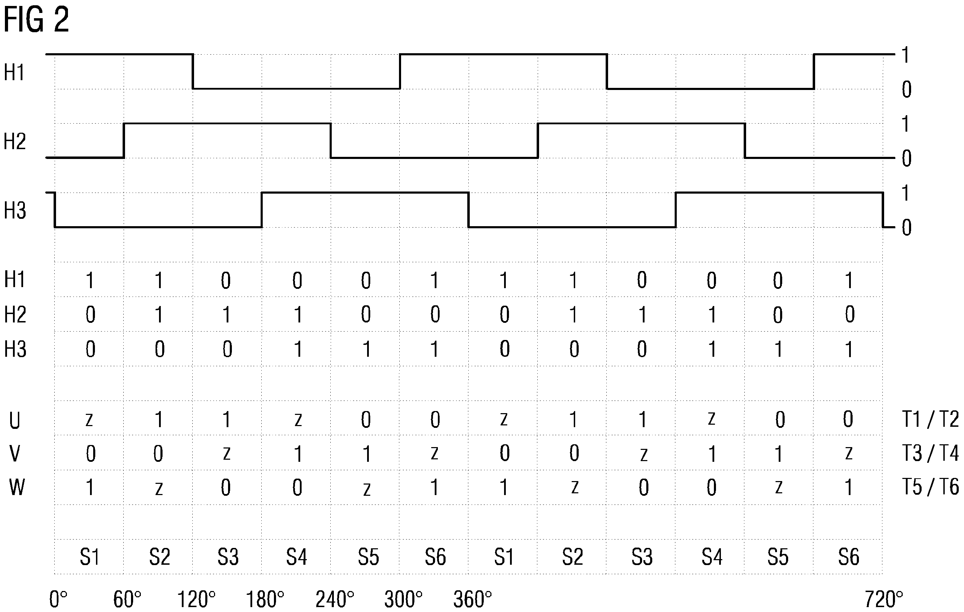

FIG 2 zeigt im oberen Teil den Signalverlauf der binären Ausgangssignale der drei Hall-Sensoren H1, H2 und H3 über zwei vollständige Umdrehungen (720°) des Rotors 2 aus FIG 1. Darunter sind die Ausgangssignale jeweils in Form von Binärzahlen (1 entspricht High, 0 entspricht Low) angegeben.

Wie aus der Figur ferner ersichtlich ist, schaltet immer im Abstand von 60° genau eines der Ausgangssignale, d.h. es ändert seinen Zustand von High (1) nach Low (0) oder umgekehrt. Die Winkellage des Rotors 2 kann somit in 6 Sektoren S1 bis S6 von jeweils 60° unterteilt werden, innerhalb derer die Ausgangssignale der Hall-Sensoren H1 bis H3 jeweils ihren Zustand (ihr Ausgangssignal) nicht ändern. Die 6 unterschiedlichen Sektoren S1 bis S6 und die jeweils zugeordneten Grenzwinkel (0°, 60°, 120°, ...) sind dem unteren Teil von FIG 2 zu entnehmen.

Aus den drei Ausgangssignalen der Hall-Sensoren H1 bis H3 ergeben sich 6 unterschiedliche Zustände. Weißt man dem Sensor H1 das LSB (least significant bit) und dem Sensor H3 das HSB (highest significant bit) zu, lassen sich aus den binären Werten theoretisch Zahlen zwischen 0 und 7 ($H1*2^0 + H2*2^1 + H3*2^2$) ermitteln, wobei hier zwei Zustände nicht vorkommen und somit unzulässige Ausgangssignale sind.

Aus der Hallsignal-Codierung für das Ausführungsbeispiel ergibt sich damit für die Sektoren:

$$S1 \ (0° - 60°): \ 001 \ (BIN) = 1$$

$$S2 \ (60° - 120°): \ 011 \ (BIN) = 3$$

$$S3 \ (120° - 180°): \ 010 \ (BIN) = 2$$

$$S4 \ (180° - 240°): \ 110 \ (BIN) = 6$$

$$S5 \ (240° - 300°): \ 100 \ (BIN) = 4$$

$$S6 \ (300° - 360°): \ 101 \ (BIN) = 5$$

Anhand dieser Codierung und der daraus ersichtlichen Zuordnung der Winkelstellung des Rotors 2 zu einem der Sektoren S1 bis S6 erfolgt die passende Ansteuerung der Erregerwicklungen U, V und W bzw. der Schaltzustand der Transistoren T1 bis T6. Diese sind beispielhaft ebenfalls aus FIG 2 ersichtlich. Beispielsweise bedeutet für die Erregerwicklung U der Wert 0, dass im Falle einer Blockkommutierung der Transistor T1 (siehe FIG 1) offen und der Transistor T2 durchgeschaltet ist und somit der Minuspol (Masse) der Spannungsquelle $U_d$ an dem ersichtlichen Wicklungsende der Erregerwicklung U anliegt. Der Wert 1 bedeutet hingegen, dass der Transistor T1 (siehe FIG 1) durchgeschaltet und T2 offen ist und somit der Pluspol der Spannungsquelle $U_d$ an dem ersichtlichen Wicklungsende der Erregerwicklung U anliegt. Der Wert z bedeutet, beide Transistoren T1 und T2 sind geöffnet und der Spannungspunkt "floatet".

Analog verhält es sich mit den beiden anderen Erregerwicklungen V und W und den jeweils zugeordneten Transistoren T3 und T4 bzw. T5 und T6.

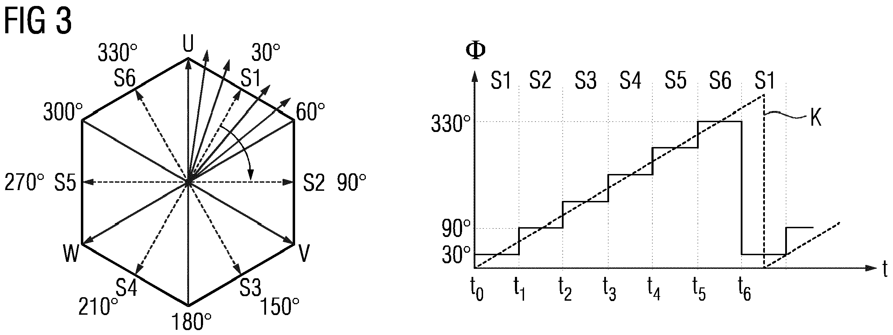

In FIG 3 sind die Sektoren S1 bis S6 mit ihren Sektorgrenzen veranschaulicht. Für jeden Sektor S1 bis S6 wird im Fall einer Blockkommutierung ein "Hauptwinkel" bestimmt, der jeweils dem mittleren Winkel zwischen den beiden Sektorgrenzen des jeweiligen Sektors entspricht. Schließt Sektor S1 den Rotorwinkel zwischen 0° und 60° ein, so beträgt der Hauptwinkel für diesen Sektor demnach 30°. Die tatsächliche Winkelstellung des Rotors 2 (siehe FIG 1) ist durch diese Einteilung für diesen Sektor somit auf ± 30° genau bestimmbar. Ebenso verhält es sich mit den übrigen Sektoren S2 bis S6 und deren Hauptwinkeln 90°, 150°, 210°, 270° und 330°.

Ebenso ersichtlich ist für das Ausführungsbeispiel gemäß FIG 3 die Lage der Erregerwicklungen U, V und W, wobei die Erregerwicklung U bezüglich der Rotor-Null-Lage bei 0°, die Erregerwicklung V bei 120° und die Erregerwicklung W bei 240° angeordnet sind.

Weiterhin angedeutet sind durch den ersichtlichen Winkelpfeil die Drehrichtung des Rotors (in positiver Uhrzeigersinn-Richtung) und dass die von der Sensoreinrichtung ermittelte Winkellage des Rotors beim Überschreiten der Sektorgrenze bei 60° zwischen dem ersten Sektor S1 und dem zweiten Sektor S2 von 30° auf 90° und damit von dem Hauptwinkel des ersten Segments S1 auf den Hauptwinkel des zweiten Segments S2 springt.

Allgemein kann mittels der Codierung und durch die Verwendung von Hall-Sensoren die Winkelstellung des Rotors auch im Stillstand des Motors erkannt werden. Auch die Drehrichtung des Motors ergibt sich bei einer Rotation des Rotors aus der Reihenfolge erkannter Sektoren. Der Motor kann somit relativ gut "aus dem Stand" angefahren werden.

Im rechten Teil von FIG 3 sind die Sektoren und Hauptwinkel für eine Rotation des Rotors 2 mit konstanter Winkelgeschwindigkeit nochmals veranschaulicht. Durch die konstante Winkelgeschwindigkeit erfolgen die Umschaltzeitpunkte in äquidistanten zeitlichen Abständen.

Bei der Blockkommutierung wird immer auf die Hauptwinkel der Sektoren S1 bis S6 geregelt und es werden immer nur zwei Erregerwicklungen (Phasen) bestromt, wie beispielhaft in FIG 2 veranschaulicht wurde. Dies hat jedoch mehrere Nachteile wie Drehmomentrippel oder erhöhte Verluste im Motor 1 zur Folge.

Um diese Nachteile zu umgehen, werden gemäß einer Ausführungsform der Erfindung nicht nur die Hauptwinkel, sondern auch die Winkelinformationen der Sektor-Übergänge zur Regelung der Stromrichtereinrichtung verwendet.

Steht der Rotor 2 still bzw. kommt zum Stillstand, wird zur Regelung der Hauptwinkel als Rotorwinkel angenommen, der wie oben beschrieben anhand der Codierung der Ausgangssignale der Hall-Sensoren H1 bis H3 bestimmbar ist.

Bewegt sich der Rotor 2, hat dies - zumindest bei einer Drehung des Rotors 2 um mehr als 60° - zur Folge, dass die Winkellage des Rotors 2 während der Drehbewegung in unterschiedlichen Sektoren liegt. Dabei lässt sich der Rotorwinkel an den Sektor-Übergängen, also im Ausführungsbeispiel gemäß FIG 1 die Winkelstellungen des Rotors 2 bei 0°, 60°, 120° usw., sehr genau ("exakt") bestimmen.

Mittels der gemessenen Zeit zwischen den Sektor-Übergängen kann die momentane Winkelgeschwindigkeit bzw. Drehzahl des Rotors 2 bestimmt werden. Nimmt man beide Informationen zusammen, also die genaue Winkelinformation an den Sektor-Übergängen und die Winkelgeschwindigkeit, so können die Winkelstellungen des Rotors 2 zwischen den Sektor-Übergängen interpoliert bzw. ausgehend von einem bestimmten Sektor-Übergang extrapoliert werden. Dieser Vorgang wird auch als "Winkelkorrektur" bezeichnet. Damit liegt die tatsächliche Winkelstellung $\phi$ des Rotors 2 für alle Winkel sehr viel genauer vor im Vergleich zu der bisherigen Methode mit einer Genauigkeit von $\pm$ 30°. Die Abweichung zwischen der gemessenen bzw. messtechnisch bestimmten Winkelstellung des Rotors 2 und der tatsächlichen Winkelstellung des Rotors 2 wird dadurch sehr viel geringer.

Damit eine derartige, an die jeweilige Winkellage des Rotors 2 angepasste Steuerung des Erregerstromes in den Wicklungen U, V und W gelingen kann, ist eine genaue Bestimmung der Winkellage des Rotors 2 erforderlich. Die Bestimmung der Winkellage $\phi$ des Rotors 2 erfolgt daher bei dem bürstenlosen Gleichstrommotor 1 gem. FIG 1 vorteilhaft in der oben sowie nachfolgend beschriebenen Art und Weise.

Im Unterschied zu der Aufführungsform mit einer Blockkommutierung erzeugt ein bürstenloser Gleichstrommotor 1 mit einer sinuskommutierten Pulsweitenmodulation ein wesentlich gleichmäßigeres Drehmoment und damit einen besseren Motorrundlauf.

FIG 3 veranschaulicht die zuletzt beschriebene Vorgehensweise grafisch. Dazu sind in der linken Hälfte von FIG 3 nun für den ersten Sektor S1 neben dem Hauptwinkel von 30° (strichlierter Pfeil) auch exemplarisch einige weitere Winkellagen eingezeichnet, die nun ebenfalls von der Sensoreinrichtung erfasst und als Ausgangssignal ausgegeben werden können. Die Anzahl der zwischen den Sektorgrenzen erzeugbaren Zwischenwinkel ist nahezu beliebig, so dass ein nahezu kontinuierlicher Verlauf der Winkellage ausgebbar ist. Dies ist in der rechten Hälfte von FIG 3 dargestellt, die den kontinuierlichen Verlauf der Winkellage in Form der strichlierten Linie K zeigt.

Die höhere Genauigkeit bei der Bestimmung der Winkellage des Rotors 2 kann vorteilhaft bei der Regelung der Stromrichtereinrichtung 4 verwendet werden. Insbesondere ist es dadurch möglich, das von den Erregerwicklungen U, V, W erzeugte Drehfeld besser an die jeweilige Anwendung des Motors 1 anzupassen. Insbesondere ist damit eine für viele Motor-Anwendungen erforderliche feldorientierte Regelung (FOC) des Motorstromes möglich, bei der insbesondere eine sinusförmig modulierte pulsförmige Ansteuerung der Transistoren der Stromrichtereinrichtung erfolgt.

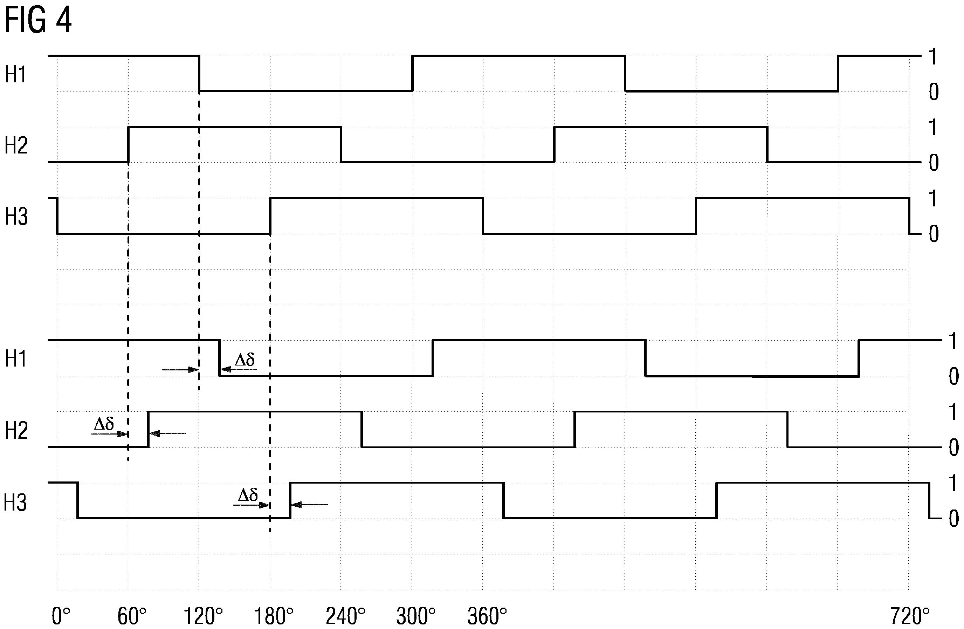

Eine exakte Erkennung der Winkelstellung des Rotors 2 ist nur dann möglich, wenn die tatsächliche Ist-Position der verwendeten Hall-Sensoren H1 bis H3 mit der vorbestimmten SollPosition (im Ausführungsbeispiel gemäß Fig 1 bei 30°, 150° und 270°) übereinstimmt. Fehlpositionierungen führen unweigerlich zu fehlerhaften Messwerten bezüglich der Winkelstellung des Rotors 2 und damit gegebenenfalls zu einer fehlerhaften Ansteuerung der Erregerwicklungen U, V und W. FIG 4 beschreibt dies anhand der ersichtlichen Ausgangssignale der Hall-Sensoren H1, H2 und H3.

In der oberen Hälfte von FIG 4 sind entsprechend FIG 2 die Ausgangssignale in Bezug auf die tatsächliche Winkellage des Rotors nochmals dargestellt.

Aus der unteren Hälfte von FIG 4 sind die um den Winkel $\Delta\delta$ verschobenen Ausgangssignale ersichtlich, die aus einer Fehlpositionierung der Hall-Sensoren H1, H2 und H3 jeweils um eben diesen Winkel in positiver Drehrichtung des Rotors 2 resultieren.

Zur "elektronischen" Korrektur dieser Fehlpositionierung muss nachfolgend im regulären Betrieb des Motors 1 dieser Korrekturwinkel zu dem mittels der Sensoreinrichtung ermittelten Winkellage des Rotors 2 addiert werden, um die korrigierte tatsächliche Winkellage des Rotors 2 zu erhalten.

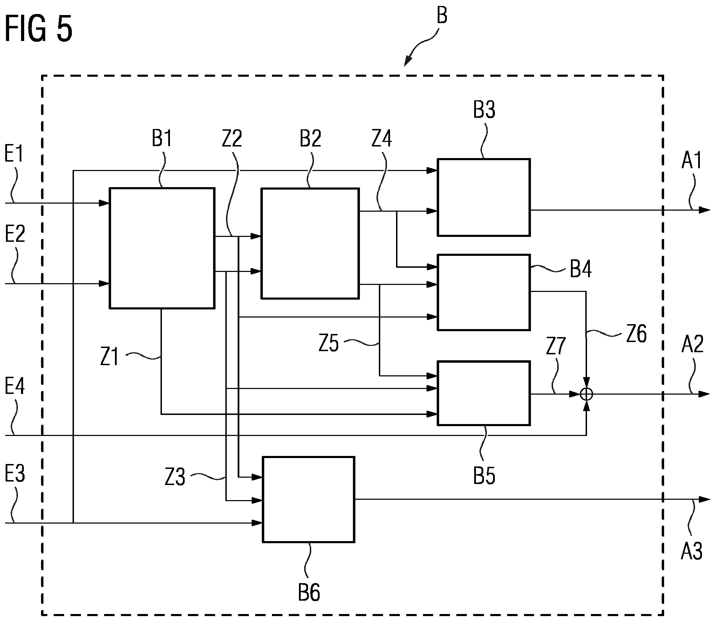

Die Erfindung wird nachfolgend anhand eines aus FIG 5 ersichtlichen Blockschaltbildes weiter erläutert. Dabei sind der Berechnungseinheit B als Eingangssignale E1 die drei Ausgangssignale der Hall-Sensoren (Hall-Signale) zugeführt. Ferner geht als weiteres Eingangssignal die Hall-Signal-Codierung, die die Zuordnung der Hall-Signale zu den Sektoren widerspiegelt, in die Berechnungseinheit B als Eingangssignal E2 ein. Weiterhin ist der Berechnungseinheit B als Eingangssignal E3 die Polpaarzahl der Gleichstrommaschine zugeführt.

In einem Block B1 erfolgt die Bestimmung des jeweils "aktiven" Sektors, d.h. des Sektors, in dem die aktuelle Winkellage des Rotors liegt. In diesem Block B1 wird anhand der Hall-Signale E1 und der Codierung E2 der gerade aktive Sektor aus den möglichen Sektoren (S1 bis S6) ermittelt.

Durch die Codierung kann der Hauptwinkel des betreffenden Sektors ermittelt und als Ausgangssignal Z1 ausgegeben werden.

B1 bestimmt und übergibt zusätzlich die Information, ob sich der aktive Sektor gegenüber dem letzten Regelungszyklus geändert hat, als Ausgangssignal Z2 aus.

Weiterhin werden in dem Block B1 Sektor-Übergänge erkannt, im Ausführungsbeispiel dadurch, dass eines der Ausgangssignale der Hall-Sensoren H1 bis H3 kippt. Mittels des Überganges von z.B. S1 zu S2 wird eine positive Drehrichtung (im Uhrzeigersinn), von S2 zu S1 eine negative Drehrichtung erkannt. Bei einem Überlauf von S6 zu S1 wird entsprechend auch eine positive Drehrichtung erkannt. Z3 zeigt als Ausgangssignal die Drehrichtung an.

Zusätzlich kann in diesem Block B1 geprüft werden, ob ein oder mehrere Sektoren "übersprungen" wurde bzw. wurden - was technisch nicht möglich ist - und eine entsprechende Fehlermeldung abgesetzt werden.

Die Ausgangssignale Z2 und Z3 des Blocks B1 sind einem Block B2 zugeführt, in dem aus der zeitlichen Änderung der Hall-Signale - wie bei einem Inkremental-Geber - die Winkelgeschwindigkeit des Rotors berechnet wird. Des Weiteren wird erkannt, ob sich der Motor im Stillstand befindet. Dies ist der Fall, wenn über einen langen Zeitraum keine Sektor-Änderung detektiert wird. Eventuell ist hier auch eine (untere) Drehzahlschwelle erforderlich, welche beispielsweise experimentell ermittelt wird.

Bei dem Ausgangssignal Z4 handelt es sich um die sog. "elektrische" Winkelgeschwindigkeit $\omega_{el}$, die ggf. bei einem Motor mit einer Polpaarzahl p > 1 noch durch die Polpaarzahl dividiert werden muss, um die "mechanische" Winkelgeschwindigkeit $\omega_{mech}$ des Rotors zu erhalten. Es gilt demnach der Zusammenhang:

$$\omega_{mech} = \omega_{el} \; / \; p$$

Entsprechend gilt über den Zusammenhang

$$\omega = 2\pi n$$

für die Drehzahl n:

$$n_{mech} = n_{el} \; / \; p$$

An seinem Ausgang liefert der Block B2 somit die Ausgangssignale Z4 (elektrische Winkelgeschwindigkeit bzw. "elektrische Drehzahl") und die "Stillstandsinformation" Z5. Letztere gibt Auskunft darüber, ob sich der Rotor überhaupt dreht.

In einem Block B3, dem als Eingangssignale die Größen Z4 und Z5 sowie die Polpaarzahl des Motors zugeführt sind, wird mittels eines Mittelwert-/ PT1-Filters die elektrische Winkelgeschwindigkeit bzw. die elektrische Drehzahl Z4 geglättet und durch die Polpaarzahl dividiert, bevor sie als geglättete mechanische Winkelgeschwindigkeit bzw. geglättete mechanische Drehzahl als Ausgangssignal A1 der Berechnungseinheit B ausgegeben wird.

Im Block B5 ermittelt der "elektrische Winkelgeber" anhand der Signale Z1, Z3 und Z5 den "elektrischen" Winkel. Wird der Zustand "Stillstand" von der Geschwindigkeitsberechnung gesetzt, wird der eingangs im Block B1 ermittelte Hauptwinkel auf den Ausgang Z7 gesetzt, also der mittlere Winkel des jeweiligen Sektors.

Im Block B4 bestimmt der Winkelinterpolator in Abhängigkeit der (elektrischen) Winkelgeschwindigkeit Z4 den "Offset-Winkel". Bei Änderung des Signals Z2 wird der Interpolator resettet und bei zu geringen Geschwindigkeiten (Z5 = 0) abgeschaltet bzw. der Ausgabewert wird auf 0 gesetzt. Das Ausgangssignal Z6 des Winkelinterpolators wird auf $\mp\pi/3$ (60°) begrenz, damit jeweils nur innerhalb der Sektorgrenzen und nicht über einen Sektor hinaus interpoliert wird.

Weiterhin geht in die Berechnungseinheit B der wie oben beschrieben ermittelte Korrekturwinkel zur Korrektur einer Fehlpositionierung (eines Positionsfehlers) wenigstens eines der Hall-Sensoren der Sensoreinrichtung als Eingangssignal E4 ein.

Die korrigierte Winkellage am Ausgang A2, die insbesondere für die feldorientierte Regelung (FOC) verwendet wird, setzt sich dann im Ausführungsbeispiel aus den Ausgangssignalen Z6, Z7 und E4 und damit aus folgenden Anteilen zusammen:

$$\varphi_{el} = \varphi_{main} \pm \pi/6 + \varphi_{int} + \varphi_{korr}$$

wobei

$\varphi_{el}$ der elektrische Winkel,

$\varphi_{main}$ der Hauptwinkel

$\varphi_{int}$ der interpolierte Offset-Winkel

$\varphi_{korr}$ der Korrekturwinkel zur Korrektur des Positionsfehlers ist.

Weiterhin sind der Zusatzwinkel $\pi/6$ und der interpolierte Winkel $\varphi_{int}$ nur bei drehendem Motor aktiv (n > "Stillstandsdrehzahl" (max. Drehzahl, die noch als Stillstand gewertet wird)).

Im Block B6 erfolgt die Positionsbestimmung in Abhängigkeit der Sektor-Änderung (Z2), der Drehrichtung (Z3) und der Polpaarzahl (E3). Dabei wird die Position inkrementiert bzw. dekrementiert. Nach einem Überlauf der maximalen Schritte fängt ein Singleturnzähler erneut bei 0 an.

Ist die Drehrichtung positiv und der Motor ist nicht im Stillstand, wird vom Hauptwinkel $\pi/6$ abgezogen.

$$\varphi = \varphi_{main} - \pi/6$$

Ist die Drehrichtung negativ und der Motor ist nicht im Stillstand, wird zum Hauptwinkel $\pi/6$ addiert.

$$\varphi = \varphi_{main} + \pi/6$$

Bei einer Polpaarzahl > 1 sind die Werte entsprechend anzupassen.

Am Ausgang des Blocks B6 werden die ermittelten Singleturnund die berechneten Multiturnwerte als Ausgangssignal A3 abgeben.

Die Winkellagen bei Stillstand oder sehr "langsamen" Motorlauf sind in FIG 3 in Form der Hauptwinkel aufgezeigt. D.h., es werden für diesen Betriebszustand jeweils die Hauptwinkel in der Mitte der Sektoren ausgegeben.

Die Winkellagen bei normalen (schnellen) Motorlauf sind ebenfalls in FIG 3 veranschaulicht. Die Winkellagen werden nach dem Stillstand entsprechend den Sektor-Übergängen gesetzt und zwischen den Zuständen wird mittels der Winkelgeschwindigkeitsinformation interpoliert.

Bei einem Motor mit Hall-Sensoren kann durch die (exakte) Winkeldetektion bei den Sektor-Übergängen in Kombination mit der Winkelinterpolation aus der berechneten Winkelgeschwindigkeit die jeweilige Winkellage des Rotors deutlich exakter bestimmt werden als bei der bisherigen Vorgehensweise. Der Rotorwinkel (die Winkellage) kann somit bei jedem Regelungstakt erfindungsgemäß bestimmt werden und es wird nicht wie bei zuvor bekannten Verfahren "hart" zwischen den Hauptwinkel umgeschaltet. Dadurch ist eine effektive Regelung der Motorströme, insbesondere in einer FOC, möglich.

Insgesamt zeigt sich durch diese Methode ein deutlich besserer Motorrundlauf mit einer gleichmäßigen Drehmomentabgabe. Zusätzlich verringern sich die Verluste im Umrichter und im Motor bei gleichem Drehmoment um theoretisch bis zu 4,7 %.

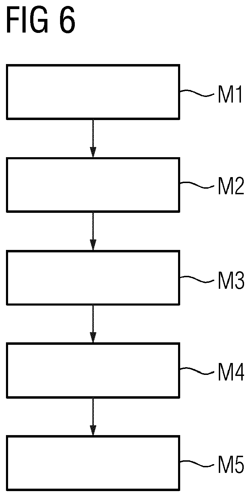

Die Erfindung zeichnet sich insbesondere durch folgende Verfahrensschritte aus, die in FIG 6 nochmals veranschaulicht sind:

In einem ersten Verfahrensschritt M1 wird die bürstenlose Gleichstrommaschine im Rahmen einer "langsamen" Testfahrt derart bestromt, dass ein langsam und gleichmäßig rotierendes Erregerfeld erzeugt wird, nach dem sich der Rotor ausrichtet. Dabei deckt das Erregerfeld einen Winkelbereich ab, durch den sich wenigstens ein Pol-Übergang des Rotors an wenigstens einem Hall-Sensor vorbei bewegt.

In einem zweiten Verfahrensschritt M2 wird überwacht, bei welchem Winkel (Ist-Erregerfeld-Winkel) des Erregerfeldes und damit bei welcher Winkellage des Rotors das Ausgangssignal des Hall-Sensors kippt.

In einem dritten Verfahrensschritt M3 wird ein Soll- Erregerfeld-Winkel bestimmt, bei dem bei einer idealen Positionierung des Hall-Sensors das Kippen des Ausgangssignals zu erwarten gewesen wäre.

In einem vierten Verfahrensschritt M4 wird aus der Differenz des Ist-Erregerfeld-Winkels und des Soll-Erregerfeld-Winkels ein Korrekturwinkel zur Korrektur der Fehlpositionierung bestimmt.

In einem fünften Verfahrensschritt M5 wird der Korrekturwinkel in einer Steuereinrichtung zur Steuerung der bürstenlosen Gleichstrommaschine im regulären Betrieb berücksichtigt.

**Patentansprüche**

1. Verfahren zur Korrektur einer Fehlpositionierung wenigstens eines ersten Hall-Sensors (H1) einer bürstenlosen Gleichstrommaschine (1),

wobei die bürstenlose Gleichstrommaschine (1) einen Stator (3) mit wenigstens drei Erregerwicklungen (U, V, W), einen Rotor (2) mit wenigstens einem Permanentmagnet (N, S), eine Sensoreinrichtung mit dem einen Hall-Sensor (H1) sowie wenigstens zwei weiteren Hall-Sensoren (H2, H3) und eine Stromrichtereinrichtung (4) zur Vorgabe eines Stromflusses durch die Erregerwicklungen (U, V, W) umfasst,

wobei ein Stromfluss durch die Erregerwicklungen (U, V, W) derart vorgegeben wird, dass sich ein elektromagnetisches Erregerfeld und synchron dazu der Rotor (2) um wenigstens einen vorgegebenen oder vorgebbaren Winkelbereich dreht,

wobei während der Drehung ein Ist-Erregerfeld-Winkel erfasst wird, bei dem ein von dem ersten Hall-Sensor (H1) erzeugtes Ausgangssignal sich ändert,

wobei eine Differenz zwischen dem Ist-Erregerfeld-Winkel und einem Soll-Erregerfeld-Winkel bestimmt wird und anhand der Differenz ein erster Korrekturwinkel ($\Delta\delta$) für den ersten Hall-Sensor (H1) bestimmt wird,

wobei der erste Korrekturwinkel ($\Delta\delta$) in einer von der Stromrichtereinrichtung (4) umfassten Steuereinrichtung (5) zur Steuerung des Stromflusses durch die Erregerwicklungen (U, V, W) berücksichtigt wird.

2. Verfahren nach Anspruch 1, wobei sich die bürstenlose Gleichstrommaschine (1) während der Drehung in einem unbelasteten und/oder keiner Beschleunigung unterliegendem Zustand befindet.

3. Verfahren nach einem der Ansprüche 1 oder 2, wobei der für den ersten Hall-Sensor (H1) ermittelte erste Korrekturwinkel ($\Delta\delta$) auch bei wenigstens einem weiteren Hall-Sensor (H2, H3), insbesondere bei allen Hall-Sensoren als Korrekturwinkel ($\Delta\delta$) verwendet wird.

4. Verfahren nach einem der Ansprüche 1 oder 2, wobei analog zu der Bestimmung des ersten Korrekturwinkels ($\Delta\delta$) für den ersten Hall-Sensor (H1) wenigstens für einen weiteren Hall-Sensor (H2, H3) ein weiterer Korrekturwinkel bestimmt wird.

5. Verfahren nach einem der vorherigen Ansprüche, wobei das Verfahren mehrfach hintereinander ausgeführt und zumindest der erst Korrekturwinkel ($\Delta\delta$) mehrfach hintereinander bestimmt und daraus ein gemittelter erster Korrekturwinkel bestimmt wird.

6. Verfahren nach einem der vorherigen Ansprüche, wobei die bürstenlose Gleichstrommaschine (1) mit einer feldorientierten Regelung betrieben wird.

7. Verfahren nach einem der vorherigen Ansprüche, wobei im Betrieb der bürstenlosen Gleichstrommaschine (1) mittels der Sensoreinrichtung eine Winkellage des Rotors (2) relativ zu dem Stator (3) bestimmt wird,

wobei mittels der Stromrichtereinrichtung (4) ein Stromfluss durch die Erregerwicklungen (U, V, W) in Abhängigkeit der von der Sensoreinrichtung detektierten Winkellage bestimmt wird, wobei die Sensoreinrichtung eine Winkelgeschwindigkeit detektiert, mit der der Rotor (2) relativ zu dem Stator (3) rotiert,

wobei anhand der detektierten Winkellage und der detektierten Winkelgeschwindigkeit eine korrigierte Winkellage bestimmt wird und der Stromfluss durch die Erregerwicklungen (U, V, W) in Abhängigkeit der korrigierten Winkellage und dem ersten Korrekturwinkel ($\Delta\delta$) bestimmt wird.

8. Korrektureinrichtung zur Durchführung eines Verfahrens nach einem der vorherigen Ansprüche zur Korrektur einer Fehlpositionierung wenigstens eines ersten Hall-Sensors (H1) einer bürstenlosen Gleichstrommaschine (1).

9. Bürstenlosen Gleichstrommaschine (1), umfassend einen Stator (3) mit wenigstens drei Erregerwicklungen (U, V, W), einen Rotor (2) mit wenigstens einem Permanentmagnet (N, S), eine Sensoreinrichtung mit wenigstens drei Hall-Sensoren (H1, H2, H3), eine Stromrichtereinrichtung (4) zur Vorgabe eines Stromflusses durch die Erregerwicklungen (U, V, W) und eine Korrektureinrichtung nach Anspruch 8.

FIG 1

# FIG 2

| | S1 | S2 | S3 | S4 | S5 | S6 | S1 | S2 | S3 | S4 | S5 | S6 | |
|----|----|----|----|----|----|----|----|----|----|----|----|----|-------|
| H1 | 1 | 1 | 0 | 0 | 0 | 1 | 1 | 1 | 0 | 0 | 0 | 1 | |
| H2 | 0 | 1 | 1 | 1 | 0 | 0 | 0 | 1 | 1 | 1 | 0 | 0 | |
| H3 | 0 | 0 | 0 | 1 | 1 | 1 | 0 | 0 | 0 | 1 | 1 | 1 | |
| U | z | 1 | 1 | z | 0 | 0 | z | 1 | 1 | z | 0 | 0 | T1 / T2 |
| V | 0 | 0 | z | 1 | 1 | z | 0 | 0 | z | 1 | 1 | z | T3 / T4 |
| W | 1 | z | 0 | 0 | z | 1 | 1 | z | 0 | 0 | z | 1 | T5 / T6 |

EP 4 287 493 A1

# FIG 3

# FIG 4

EP 4 287 493 A1

FIG 5

## FIG 6

```
┌─────────────────────┐
│                     │──── M1
└─────────────────────┘
           │
           ▼
┌─────────────────────┐
│                     │──── M2
└─────────────────────┘
           │
           ▼
┌─────────────────────┐
│                     │──── M3
└─────────────────────┘
           │
           ▼
┌─────────────────────┐
│                     │──── M4
└─────────────────────┘
           │
           ▼
┌─────────────────────┐
│                     │──── M5
└─────────────────────┘
```

Europäisches
Patentamt

European
Patent Office

Office européen
des brevets

**EUROPÄISCHER RECHERCHENBERICHT**

**Nummer der Anmeldung**

**EP 22 17 7033**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2018 213425 A1 (HYUNDAI MOTOR CO LTD [KR]; KIA MOTORS CORP [KR]) 13. Juni 2019 (2019-06-13) | 1-4,6-9 | INV. H02P6/16 H02P6/15 |
| Y | * Absätze [0002], [0030], [0059], [0083]; Abbildungen 1,2 * | 5 | |
| Y | EP 3 346 602 A1 (HONEYWELL INT INC [US]) 11. Juli 2018 (2018-07-11) * Absatz [0041] * | 5 | |
| A | US 10 903 768 B2 (HYUNDAI MOTOR CO LTD [KR]; KIA MOTORS CORP [KR]) 26. Januar 2021 (2021-01-26) * Anspruch 1 * | 1-9 | |

**RECHERCHIERTE SACHGEBIETE (IPC)**

H02P

Der vorliegende Recherchenbericht wurde für alle Patentansprüche erstellt

| Recherchenort | Abschlußdatum der Recherche | Prüfer |
|---|---|---|
| München | 17. November 2022 | Schneider, Gernot |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 17 7033

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-11-2022

| Im Recherchenbericht angeführtes Patentdokument | Datum der Veröffentlichung | Mitglied(er) der Patentfamilie | Datum der Veröffentlichung |
|---|---|---|---|
| DE 102018213425 A1 | 13-06-2019 | CN 109905058 A | 18-06-2019 |
| | | DE 102018213425 A1 | 13-06-2019 |
| | | JP 7168363 B2 | 09-11-2022 |
| | | JP 2019103382 A | 24-06-2019 |
| | | KR 20190067468 A | 17-06-2019 |
| | | US 2019181780 A1 | 13-06-2019 |
| EP 3346602 A1 | 11-07-2018 | EP 3346602 A1 | 11-07-2018 |
| | | JP 7076985 B2 | 30-05-2022 |
| | | JP 2018109609 A | 12-07-2018 |
| | | US 9966885 B1 | 08-05-2018 |
| US 10903768 B2 | 26-01-2021 | CN 111464096 A | 28-07-2020 |
| | | DE 102019216475 A1 | 09-07-2020 |
| | | KR 20200084577 A | 13-07-2020 |
| | | US 2020220487 A1 | 09-07-2020 |

EPO FORM P0461

Für nähere Einzelheiten zu diesem Anhang : siehe Amtsblatt des Europäischen Patentamts, Nr.12/82